**Europäisches Patentamt**

**European Patent Office**

**Office européen des brevets**

(19)

(11) Veröffentlichungsnummer : **0 163 023**
**B1**

(12) **EUROPÄISCHE PATENTSCHRIFT**

(45) Veröffentlichungstag der Patentschrift :
04.05.88

(21) Anmeldenummer : 85102940.5

(22) Anmeldetag : 14.03.85

(51) Int. Cl.⁴ : **B 65 D 55/06**

(54) Behälter für Datenträger, insbesondere Disketten.

(30) Priorität : 26.05.84 DE 8416122 U

(43) Veröffentlichungstag der Anmeldung :
04.12.85 Patentblatt 85/49

(45) Bekanntmachung des Hinweises auf die Patenterteilung : 04.05.88 Patentblatt 88/18

(84) Benannte Vertragsstaaten :
DE FR GB IT NL

(56) Entgegenhaltungen :
BE-A- 899 151
DE-A- 2 735 151
FR-A- 2 148 224
FR-A- 2 483 883
US-A- 3 297 153
US-A- 3 779 374

(73) Patentinhaber : Eichner Organisation KG
Postfach 12
D-8630 Coburg (DE)

(72) Erfinder : Eichner, Falk J.
Lange Gasse 3
D-8630 Coburg (DE)

(74) Vertreter : Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Behälter für Datenträger mit den im Oberbegriff des Patentanspruchs 1 genannten Merkmalen. Versandbehälter mit diesen Merkmalen sind in der DE-A27 35 151 und der US-A-3 779 374 offenbart. Bei ihnen ist der Kopf des Verschlußelements, der zuerst durch die Bohrungen geschoben wird, mit elastisch deformierbaren Fortsätzen versehen, die ein unbefugtes Öffnen des Behälters verhindern sollen. Dies wird jedoch nur bedingt erreicht, da der von außen zugängliche Kopf mit relativ einfachen Mitteln so deformiert werden kann, daß er ohne Beschädigung des Sollbruchbereichs zurückschiebbar ist.

Aufgabe der Erfindung ist es, den Behälter und sein Verschlußelement so auszubilden, daß das Verschlußelement praktisch nur durch Zerstörung aufbrechbar ist.

Diese Aufgabe wird durch die im kennzeichnenden Teil des Patentanspruchs 1 angegebenen Merkmale gelöst. Der durchgeschobene Kopf des Verschlußelements legt sich nämlich schützend vor die Lippen des Behälterdurchbruchs, so daß diese nicht mehr zugänglich sind, selbst dann nicht, wenn man ein besonders dafür konstruiertes Werkzeug zur Verfügung hätte.

Die Unteransprüche definieren bevorzugte Weiterbildungen dieses Konzepts.

Die Erfindung wird nachstehend anhand der in den beigefügten Abbildungen dargestellten Ausführungsbeispiele näher erläutert.

Fig. 1 zeigt vergrößert eine Seitenansicht (Schmalseite) eines Behälters.

Fig. 2 zeigt eine gegenüber Fig. 1 vergrößerte Teilschnittdarstellung des Verschlußbereichs des Behälters von Fig. 1, wobei die Schnittebene parallel zur Zeichnungsebene von Fig. 1 liegt.

Fig. 3 zeigt eine zusätzliche Ausführungsform ausschnittweise in einem Schnitt entsprechend Fig. 2.

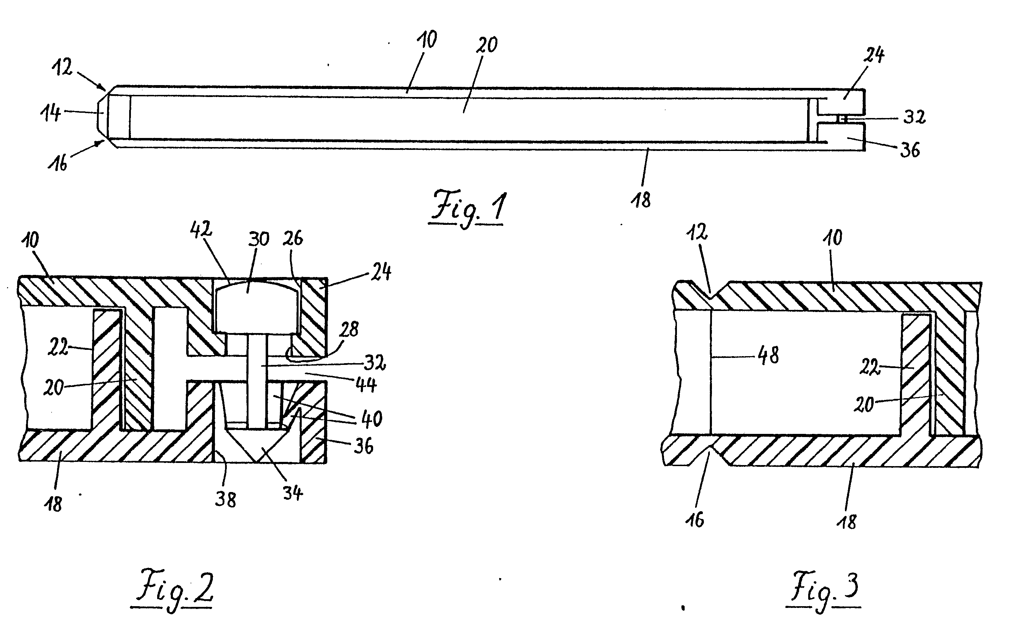

Gemäß Fig. 1 ist der dargestellte Behälter mit Ausnahme der Verschlußelemente ein einstückiges Spritzgußteil. Er umfaßt zwei Klappdeckelteile 10, 18, die über zwei angespritzte Gelenkverbindungen 12, 16 mit einem Rückenteil 14 verbunden sind. Die Klappdeckelteile 10, 18 sind stark genug, um einen hierzwischen aufgenommenen (nicht dargestellten) Datenträger während des Postversands zu schützen. Auf den einander zugekehrten Seiten der Klappdeckelteile 10, 18 sind an diese nach innen einspringende, umlaufende Wandungen 20, 22 angeformt, wobei die Wandungen 20 des Klappdeckelteils 10 die Wandungen 22 des Klappdeckelteils 18 außen übergreifen. Eine zwischen den Klappdeckelteilen 10, 18 innerhalb der Wandungen 22 liegende Diskette ist daher bei geschlossenem Behälter gegen Zugriff geschützt. Die großen Flächen der Klappdeckelteile 10, 18 können mit Adressenaufklebern u. dgl. versehen werden.

Der Grundriß des Behälters, z. B. von oben auf Fig. 1 gesehen, ist rechteckig, und die beiden Gelenkverbindungen 12, 16 erstrecken sich längs einer Kante der jeweiligen Klappdeckelteile 10, 18. An den beiden freien Ecken der Klappdeckelteile 10, 18 ist je ein Verschluß vorgesehen.

An das Klappdeckelteil 10 ist in beiden freien Ecken auf der dem anderen Klappdeckelteil 18 zugewandten Seite ein vorstehender, im wesentlichen die Form eines kurzen Zylinders aufweisender Fortsatz 24 angeformt, der eine zylindrische Ausnehmung 26 mit einem zu diesem koaxialen inneren Durchbruch 28 aufweist. In die Ausnehmung 26 paßt ein erster Kopf 30 eines plombenartigen Verschlußelements, das durch einen Schaft 32, der einen Sollbruchbereich darstellt, und einen zweiten Kopf 34 vervollständigt wird. Das Verschlußelement ist ebenfalls ein einstückiges Spritzgußteil.

Das Klappdeckelteil 18 weist seinerseits einen dem Fortsatz 24 des ersten Klappdeckelteils 10 zugewandten Fortsatz 36 mit einer mit der Ausnehmung 26 fluchtenden Ausnehmung 38 auf, in die sich von der dem Fortsatz 24 zugekehrten Seite aus angeformte Sperrlippen 40 — in diesem Ausführungsbeispiel sind drei Sperrlippen 40 vorgesehen — in Richtung zur außenseitigen Öffnung der Ausnehmung 38 erstrecken.

Der zweite Kopf 34 des Verschlußelements ist zu seinem freien Ende hin sich verjüngend — hier kegelig — ausgebildet und besitzt an seinem schaftseitigen Fuß einen kleineren Durchmesser als der erste Kopf 30 und der Durchbruch 28, aber einen größeren Durchmesser als der von den freien Enden der Sperrlippen 40 begrenzte Durchmesserbereich derart, daß der zweite Kopf 34 von oben (in Bezug auf Fig. 2) durch die Ausnehmung 26 und den Durchbruch 28 bis hinter die Sperrlippen 40 in der Ausnehmung 38 einführbar ist, wobei die Sperrlippen 40 dann ausfedern und hinter den Kopf 34 zurückschnappen und so eine Einrastverbindung für das Verschlußelement gebildet wird. Die einander zugewandten Seiten der Fortsätze 24, 36 sind mit Abstand zueinander unter Ausbildung eines Spaltes 44 infolge des Abstützens der Wandungen 20, 22 an den gegenüberliegenden Klappdeckelteilen 18, 10 angeordnet. Der Behälter kann jetzt dadurch geöffnet werden, daß man etwa eine Münze in den Spalt 44 steckt und durch Verkanten hiervon die zum Zerreißen des Schaftes 32 erforderliche Kraft aufbringt.

Auf der freien Oberseite 42 des Kopfes 30 können individualisierende Muster etwa nach Art von Siegelabdrücken vorgesehen sein.

Die Verschlußelemente werden zweckmäßigerweise vollständig von den Ausnehmungen 26, 38 aufgenommen und stehen nicht nach außen vor.

Bei der in Fig. 3 dargestellten Ausführungsform ist der Behälter bis auf den Entnahmebereich für den Datenträger kastenförmig geschlossen ausgebildet, während die Klappdeckelteile 10, 18 über die Gelenkverbindungen 12, 16 nur im Entnahmebereich vorgesehen sind. Gegebenenfalls kommt man auch mit einem Klappdeckelteil, etwa dem Klappdeckelteil 10, aus, wobei dann die Fortsätze 36 die gleiche Stärke wie der Boden des Behälters besitzen sollte, die Wandung 22 zur Entnahmeseite hin zu entfallen hätte und der Kopf 30 zur Ausbildung der Einrastverbindung verwendet würde. Im ersteren Falle sind beide Wandungen 20, 22 und im letzteren Falle nur die Wandung 20 mit Einschnitten 48 in Höhe der Gelenkverbindungen 12, 16 senkrecht zur Klappdeckelebene zu versehen.

**Patentansprüche**

1. Behälter für Datenträger, insbesondere für Disketten, der als Postversandhülle ausgebildet ist und zwei relativ zueinander zum Öffnen des Behälters bewegliche Teile (10, 18) besitzt, und mit mindestens einem einen Sollbruchbereich (32) aufweisenden, als Plombe einstückig ausgebildeten Verschlußelement (30, 32, 34) mit zwei Köpfen (30, 34), wobei die Behälterteile (10, 18) fluchtende Durchbrüche (28, 40) aufweisen, die von dem Verschlußelement durchsetzt sind, dadurch gekennzeichnet, daß der Durchbruch (40) eines der Teile (18) von federnden Sperrlippen (40) begrenzt ist, die sich einwärts erstrecken, und die sich beim Durchschieben eines Kopfes (34) des Verschlußelements von der Behälter innenseite her aufspreizen, und nach dem Durchschieben hinter dem Kopf (34) zurückschnappen.

2. Behälter nach Anspruch 1, dadurch gekennzeichnet, daß die Köpfe (30, 34) des Verschlußelements in entsprechende Ausnehmungen (26, 38) der Behälterteile (10, 18) eingesenkt sind.

3. Behälter nach Anspruch 1 oder 2, dadurch gekennzeichnet, daß zwischen den Behälterteilen (10, 18) im Bereich des Verschlusses ein Abstandsschlitz (44) vorhanden ist.

4. Behälter nach Anspruch 1, dadurch gekennzeichnet, daß die Behälterteile einstückig aus Kunststoff gespritzt sind und miteinander durch eine angespritzte Gelenkanordnung (12, 16) verbunden sind.

5. Behälter nach Ansprüchen 3 und 4, dadurch gekennzeichnet, daß der Abstandsschlitz (44) durch an die Behälterteile (10, 18) angeformte Wandungen (20, 22) definiert ist.

6. Behälter nach einem der vorangehenden Ansprüche, dadurch gekennzeichnet, daß wenigstens eine freie Außenseite des Verschlußelements (30, 32, 34) ein individualisierendes Muster trägt.

**Claims**

1. Container for data carriers, especially for diskettes, which is in the form of a postal package and has two portions (10, 18) movable relative to one another for opening the container, and at least one closure element (30, 32, 34) made in one piece like a lead seal and having a predefined breaking region (32) and two head portions (30, 34), the container portions (10, 18) having aligned through-holes (28, 40) through which the closure element passes, characterised in that the through-hole (40) in one of the portions (18) is defined by resilient locking lips (40) which extend inwardly and which spread apart when a head portion (34) of the closure element is pushed through them from the inside of the container and snap back behind the head portion (34) once it has been pushed through.

2. Container according to claim 1, characterised in that the head portions (30, 34) of the closure element are sunk in corresponding recesses (26, 38) in the container portions (10, 18).

3. Container according to claim 1 or 2, characterised in that there is a separating slot (44) between the container portions (10, 18) in the region of the closure member.

4. Container according to claim 1, characterised in that the container portions are injection moulded in one piece from plastics material and are connected to one another by an integrally formed hinge arrangement (12, 16).

5. Container according to claims 3 and 4, characterised in that the separating slot (44) is defined by walls (20, 22) integrally formed with the container portions (10, 18).

6. Container according to any one of the preceding claims, characterised in that at least one free outer surface of the closure element (30, 32, 34) carries an individualising pattern.

**Revendications**

1. Récipient pour des supports d'information, notamment pour des disquettes, qui est réalisé sous la forme d'une enveloppe d'expédition postale, possède deux parties (10, 18) déplaçables l'une par rapport à l'autre pour l'ouverture du récipient, et comporte un organe de fermeture (30, 32, 34) possédant au moins une zone de rupture de consigne (32) et réalisée d'un seul tenant sous la forme d'un plomb à sceller, muni de deux têtes (30, 34), les parties (10, 18) des récipients comportant des perçages alignés (28, 40) qui sont traversés par l'organe de fermeture, caractérisé en ce que le perçage (40) de l'une des parties (18) est limité par des rebords élastiques de blocage (40) qui s'étendent en position rentrante et s'écartent lors du passage d'une tête (34) de l'organe de fermeture, à partir du côté intérieur du récipient, et se rabattent selon un déplacement rapide en s'encliquetant derrière la tête (34), après le passage de cette dernière.

2. Récipient selon la revendication 1, caractérisé en ce que les têtes (30, 34) de l'organe de fermeture sont enfoncées dans des évidements correspondants (28, 38) des parties (10, 18) du récipient.

3. Récipient selon la revendication 1 ou 2, caractérisé en ce qu'une fente d'espacement (44) est présente entre les parties (10, 18) du récipient, dans la zone de fermeture.

4. Récipient selon la revendication 1, caractérisé en ce que les parties du récipient sont réalisées d'un seul tenant en une matière plastique par moulage par injection et sont reliées entre elles par un système d'articulation (12, 16) obtenu par moulage par injection.

5. Récipient selon les revendications 3 et 4, caractérisé en ce que la fente d'espacement (44) est définie par des parois (20, 22) formées par façonnage sur les parties (10, 18) du récipient.

6. Récipient selon l'une quelconque des revendications précédentes, caractérisé en ce qu'au moins une face extérieure libre de l'organe de fermeture (30, 32, 34) porte un dessin qui l'individualise.

_Fig. 1_

_Fig. 2_

_Fig. 3_

0 163 023